# EUROPÄISCHE PATENTANMELDUNG

(11) **EP 2 492 772 A2**
(43) Veröffentlichungstag der Anmeldung: **29.08.2012**
(21) Anmeldenummer: 11010018.7
(22) Anmeldetag: 20.12.2011
(51) Int. Cl.: G05D 16/04

(54) **Vorrichtung zur Druckreduzierung**

(30) Priorität: 24.02.2011 DE 102011012154
(71) Anmelder: Linde Aktiengesellschaft, 80331 Munich (DE)
(72) Erfinder: Helmschrott, Rolf-Harald, 82515 Wolfratshausen (DE); Wellenhofer, Anton, 82069 Hohenschäftlarn (DE); Hoennicke, Helmut, 01259 Dresden (DE); Epple, Stefanie, 73734 Esslingen (DE); Källgren, Olof, 82041 Deisenhofen (DE); Ambros, Walther, 86567 Hilgertshausen (DE); Dörner, Wolfgang, Dr., 81375 München (DE)
(74) Vertreter: Zahn, Christoph

(57) **Zusammenfassung**

Es wird eine Vorrichtung zur Druckreduzierung eines unter Druck stehenden Mediums beschrieben, wobei das Medium nach erfolgter Druckreduzierung einem nachgeschalteten Abnehmer oder System zugeführt wird und der Abnehmer bzw. das System einen festgelegten Auslegungsdruck aufweist. Erfindungsgemäß werden zwei in Reihe geschaltete Druckregler (3, 4) sowie zugehörige Ventile (2, 6, 8) vorgesehen, die der Druckreduzierung des unter Druck stehenden Mediums dienen.

Ferner wird eine mobile Transportvorrichtung vorgeschalgen, die eine derartige Vorrichtung aufweist.

## Beschreibung

### Vorrichtung zur Durckreduzierung

Die Erfindung betrifft eine Vorrichtung zur Druckreduzierung eines unter Druck stehenden Mediums, wobei das Medium nach erfolgter Druckreduzierung einem nachgeschalteten Abnehmer oder System zugeführt wird und der Abnehmer bzw. das System einen festgelegten Auslegungsdruck aufweist.

Ferner betrifft die Erfindung eine mobile Transportvorrichtung, insbesondere ein Fahrzeug, aufweisend wenigstens eine Speichervorrichtung, die der Speicherung eines unter Druck stehenden Mediums dient, wobei die Speichervorrichtung eine Entnahme- bzw. Abfüllleitung aufweist.

Gattungsgemäße Vorrichtungen zur Druckreduzierung sowie gattungsgemäße mobile Transportvorrichtungen kommen bei der Distribution unterschiedlichster komprimierter Medien zur Anwendung. Der Stand der Technik sowie die Erfindung seien nachfolgend anhand des Beispieles Wasserstoff erläutert. Es sei jedoch betont, dass die nachfolgenden Überlegungen im Prinzip auf alle anderen Medien übertragbar sind.

Bei den gegenwärtig im Einsatz befindlichen Wasserstoff-Trailern wird der komprimierte Wasserstoff bei einem Druck von nominell 200 bar gespeichert. Die Wasserstoff-verbrauchenden Systeme bzw. Anwendungen der Wasserstoff-Abnehmer bzw. -Kunden sind üblicherweise für einen maximalen Druck von 50 bar ausgelegt. Es muss daher sichergestellt werden, dass der aus einem Wasserstoff-Trailer bereitgestellte Wasserstoff nicht dazu führt, dass das Wasserstoff-System des Abnehmers mit einem zu hohen Druck beaufschlagt wird. Aus diesem Grund sind entsprechende Sicherheitseinrichtungen vorzusehen, die bisher ausschließlich im Wasserstoff-System des Abnehmers integriert sind. Gängige Wasserstoff-Trailer können daher ohne entsprechende Sicherheitseinrichtungen versehen werden.

Gegenwärtig wird angedacht, die Drücke, mit denen Wasserstoff transportiert wird, auf bis zu 500 bar und mehr zu erhöhen. Geeignete Speichervorrichtungen hierfür werden bereits getestet und liefern Erfolg versprechende Ergebnisse. Der Wechsel zu derartigen hohen Drücken würde jedoch bedeuten, dass die bei den Abnehmern vorhandenen Sicherheitseinrichtungen ebenfalls auf diese hohen Drücke ausgelegt werden müssen, was für die Wasserstoff-Abnehmer entsprechende Investitionskosten zur Folge hätte.

Aufgabe der vorliegenden Erfindung ist es, eine gattungsgemäße Vorrichtung zur Druckreduzierung eines unter Druck stehenden Mediums sowie eine mobile Transportvorrichtung, die wenigstens eine Speichervorrichtung aufweist, anzugeben, die eine Um- bzw. Nachrüstung der Sicherheitseinrichtungen der Abnehmer der unter Druck stehenden Medien obsolet machen.

Zur Lösung dieser Aufgabe wird eine Vorrichtung zur Druckreduzierung eines unter Druck stehenden Mediums, wobei das Medium nach erfolgter Druckreduzierung einem nachgeschalteten Abnehmer oder System zugeführt wird und der Abnehmer bzw. das System einen festgelegten Auslegungsdruck aufweist, vorgeschlagen, die die Merkmale der Patentansprüche 1, 2 oder 3 aufweist. Es werden somit drei Alternativen der erfindungsgemäßen Vorrichtung zur Druckreduzierung eines unter Druck stehenden Mediums vorgeschlagen.

Die erfindungsgemäße mobile Transportvorrichtung ist dadurch gekennzeichnet, dass sie wenigstens eine erfindungsgemäße Vorrichtung zur Druckreduzierung eines unter Druck stehenden Mediums aufweist, wobei diese der Entnahme- bzw. Abfüllleitung der mobilen Transportvorrichtung zugeordnet ist.

Weitere vorteilhafte Ausgestaltungen der erfindungsgemäßen Vorrichtung zur Druckreduzierung sowie der erfindungsgemäßen mobilen Transportvorrichtung, die Gegenstände der abhängigen Patentansprüche darstellen, sind dadurch gekennzeichnet, dass
- erste und/oder der zweite Druckregler bzw. der Druckregler (ein) Nachdruckregler ist/sind,
- die Funktionen des ersten Ventils sowie des (ersten) Druckreglers in einem Druckregler integriert sind,
- dem ersten und/oder dem zweiten Fremd- oder Eigenmedium-gesteuerten Schaltventil bzw. dem Fremd- oder Eigenmedium-gesteuerten Schaltventil (ein) Druckanzeiger, vorzugsweise (ein) Manometer, zugeordnet ist/sind, und
- sämtliche Ventile und Druckregler bzw. Schaltventile innerhalb eines Schaltkastens oder einer Ventilbox angeordnet sind.

Die erfindungsgemäße Vorrichtung zur Druckreduzierung eines unter Druck stehenden Mediums sowie weitere vorteilhafte Ausgestaltungen derselben seien nachfolgend anhand des in der **Figur** dargestellten Ausführungsbeispieles näher erläutert.

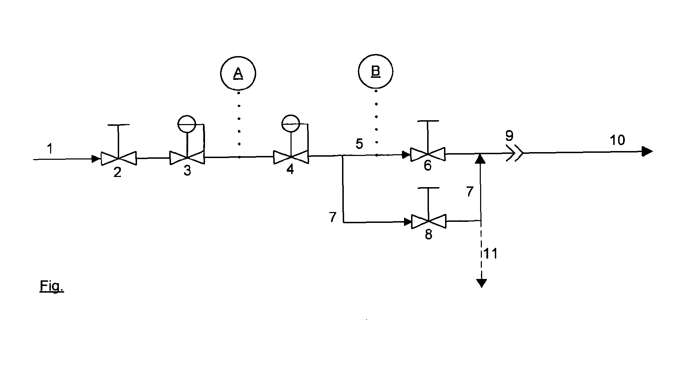

Die in der Figur dargestellte Ausführungsform der erfindungsgemäßen Vorrichtung zur Druckreduzierung eines unter Druck stehenden Mediums, wie bspw. Wasserstoff, das der Vorrichtung über Leitung 1 zugeführt wird, weist ein erstes Ventil 2 auf, das beispielsweise als Handventil ausgebildet ist. Diesem ist ein erster Druckregler 3 nachgeschaltet. Dessen Betriebsdruck auf seiner Niederdruckseite wird auf einen Wert unterhalb des Auslegungsdrucks des nachgeschalteten Abnehmers oder Systems des druckreduzierten Mediums eingestellt. Der nachgeschaltete Medium-Abnehmer bzw. das nachgeschaltete Medium-System sind in der Figur der Übersichtlichkeit halber nicht dargestellt. Dargestellt ist lediglich eine Transferleitung 10, die nach einem Verbinden mit der erfindungsgemäßen Vorrichtung über eine Kupplung 9 eine Zuführung des druckreduzierten Mediums bzw. Wasserstoffs ermöglicht.

Dem ersten Druckregler 3 nachgeschaltet ist ein zweiter Druckregler 4. Dessen Betriebsdruck auf seiner Niederdruckseite wird auf einen Wert unterhalb des Betriebsdrucks auf der Niederdruckseite des ersten Druckreglers 3 eingestellt. Der zweite Druckregler 4 dient hierbei als zusätzliche Absicherung des ersten Druckreglers 3. Den Druckreglern 3 und 4 ist jeweils ein Druckanzeiger, bspw. ein Manometer a bzw. b, zugeordnet. Die Druckregler 3 und 4 sind vorzugsweise als Nachdruckregler ausgeführt.

Des Weiteren ist dem zweiten Druckregler 4 ein zweites Ventil 6, das vorzugsweise ebenfalls als Handventil ausgebildet ist, nachgeschaltet. Ferner weist die erfindungsgemäße Vorrichtung eine By-pass-Leitung 7 auf; in dieser ist ein drittes Ventil 8 angeordnet. Auch dieses ist vorzugsweise als Handventil ausgebildet.

Alternativ zu den Druckreglern 3 und 4 können auch Fremd- oder Eigenmediumgesteuerte Schaltventile zur Anwendung kommen. Realisierbar ist ferner eine Alternative, bei der anstelle des zweiten Druckreglers ein Fremd- oder Eigenmedium-gesteuertes Schaltventil verwendet wird.

Wie bereits erwähnt, kann die erfindungsgemäße Vorrichtung zur Druckreduzierung des unter Druck stehenden Mediums beispielsweise bei Wasserstoff-Trailern Anwendung finden. In diesem Falle wird der auf dem Wasserstoff-Trailer gespeicherte Wasserstoff, der beispielsweise einen Druck von 500 bar oder mehr aufweist, der erfindungsgemäßen Vorrichtung über Leitung 1 zugeführt. Nachfolgend sei die mit der erfindungsgemäßen Vorrichtung zu realisierende Betriebsweise erläutert.

Vor Beginn des eigentlichen Umfüllvorganges wird üblicherweise zunächst eine sog. Funktionsprüfung durchgeführt. Dabei sind die Ventile 2, 6 und 8 geschlossen. Seitens des Bedienpersonals ist sodann das nachgeschaltete Medium- bzw. Wasserstoffabnehmende System, das in der Figur der Übersichtlichkeit halber nicht dargestellt ist, zu entlüften. Anschließend werden die Leitungen 1 und 10 über die Kupplung 9 miteinander verbunden.

Nunmehr wird das Ventil 8 geöffnet, um einen in den Leitungsbereichen 1 und/oder 5 ggf. bestehenden Überdruck über die By-pass-Leitung 7 abzubauen. Alternativ hierzu ist auch eine Entlastung zur Atmosphäre über die gestrichelt gezeichnete Leitung 11 möglich. Sobald der ggf. bestehende Überdruck abgebaut ist, wird das Ventil 8 geschlossen. Sodann wird das Ventil 2 (langsam) geöffnet und mittels der Manometer a und b geprüft, ob die auf den Niederdruckseiten der beiden Druckregler 3 und 4 eingestellten Betriebsdrücke eingehalten werden. Sofern dies der Fall ist, kann mit dem Umfüllen des Mediums bzw. Wasserstoffs über die Leitungsabschnitte 1, 5 und 10 zum dem Wasserstoff-abnehmenden System begonnen werden.

Dazu wird zunächst das in der Figur nicht dargestellte Entlastungs- bzw. Entlüftungsventil des Wasserstoff-Abnehmers geschlossen und anschließend das zweite Ventil 6 (langsam) geöffnet.

Um den Umfüllvorgang zu beenden, werden die Ventile 2 und 6, vorzugsweise nacheinander, geschlossen und das vorgenannte Entlastungsventil des Wasserstoff-Abnehmers wieder geöffnet. Anschließend kann die zwischen den Leitungen 1 und 10 bestehende Verbindung 9 getrennt werden.

Die erfindungsgemäße Vorrichtung zur Druckreduzierung eines unter Druck stehenden Mediums erfordert weder Sicherheitsventile noch Berstscheiben. Ferner sind auch keine sonstigen druckaktivierten Entlastungseinrichtungen erforderlich. Des Weiteren kann auf das Vorsehen von zusätzlicher elektrischer Energie, Instrumentenluft, etc. verzichtet werden.

## Patentansprüche

1. Vorrichtung zur Druckreduzierung eines unter Druck stehenden Mediums, wobei das Medium nach erfolgter Druckreduzierung einem nachgeschalteten Abnehmer oder System zugeführt wird und der Abnehmer bzw. das System einen festgelegten Auslegungsdruck aufweist, **gekennzeichnet durch**
- ein erstes Ventil (2),
- einen dem ersten Ventil (2) nachgeschalteten ersten Druckregler (3),
- wobei der Betriebsdruck auf der Niederdruckseite des ersten Druckreglers (3) auf einen Wert unterhalb des Auslegungsdrucks des nachgeschalteten Abnehmers oder Systems eingestellt wird,
- ein dem ersten Druckregler (3) zugeordneter Druckanzeiger (a),
- einen dem ersten Druckregler (3) nachgeschalteten zweiten Druckregler (4),
- wobei der Betriebsdruck auf der Niederdruckseite des zweiten Druckreglers (4) auf einen Wert unterhalb des Betriebsdrucks auf der Niederdruckseite des ersten Druckreglers (3) eingestellt wird,
- ein dem zweiten Druckregler (4) zugeordneter Druckanzeiger (b),
- ein dem zweiten Druckregler (4) nachgeschaltetes zweites Ventil (6), und
- eine das zweite Ventil (6) umgehende By-pass-Leitung (7), in der ein drittes Ventil (8) angeordnet ist.

2. Vorrichtung zur Druckreduzierung eines unter Druck stehenden Mediums, wobei das Medium nach erfolgter Druckreduzierung einem nachgeschalteten Abnehmer oder System zugeführt wird und der Abnehmer bzw. das System einen festgelegten Auslegungsdruck aufweist, **gekennzeichnet durch**
- ein erstes Ventil,
- ein dem ersten Ventil nachgeschaltetes erstes Fremd- oder Eigenmedium-gesteuertes Schaltventil,
- wobei der Betriebsdruck auf der Niederdruckseite des ersten Schaltventils auf einen Wert unterhalb des Auslegungsdrucks des nachgeschalteten Abnehmers oder Systems eingestellt wird,
- einen dem ersten Schaltventil nachgeschaltetes zweites Fremd- oder Eigenmedium-gesteuertes Schaltventil,
- wobei der Betriebsdruck auf der Niederdruckseite des zweiten Schaltventils auf einen Wert unterhalb des Betriebsdrucks auf der Niederdruckseite des ersten Schaltventils eingestellt wird,
- ein dem zweiten Schaltventil nachgeschaltetes zweites Ventil, und
- eine das zweite Ventil umgehende By-pass-Leitung, in der ein drittes Ventil angeordnet ist.

3. Vorrichtung zur Druckreduzierung eines unter Druck stehenden Mediums, wobei das Medium nach erfolgter Druckreduzierung einem nachgeschalteten Abnehmer oder System zugeführt wird und der Abnehmer bzw. das System einen festgelegten Auslegungsdruck aufweist, **gekennzeichnet durch**
- ein erstes Ventil,
- einen dem ersten Ventil nachgeschalteten Druckregler,
- wobei der Betriebsdruck auf der Niederdruckseite des Druckreglers auf einen Wert unterhalb des Auslegungsdrucks des nachgeschalteten Abnehmers oder Systems eingestellt wird,
- ein dem Druckregler zugeordneter Druckanzeiger,
- ein dem Druckregler nachgeschaltetes Fremd- oder Eigenmedium-gesteuertes Schaltventil,
- wobei der Betriebsdruck auf der Niederdruckseite des Schaltventils auf einen Wert unterhalb des Betriebsdrucks auf der Niederdruckseite des Druckreglers eingestellt wird,
- ein dem zweiten Schaltventil nachgeschaltetes zweites Ventil, und
- eine das zweite Ventil umgehende By-pass-Leitung, in der ein drittes Ventil angeordnet ist.

4. Vorrichtung nach Anspruch 1 oder 2, **dadurch gekennzeichnet, dass** erste und/oder der zweite Druckregler (3, 4) bzw. der Druckregler (ein) Nachdruckregler ist/sind.

5. Vorrichtung nach einem der Ansprüche 1, 3 oder 4, **dadurch gekennzeichnet, dass** die Funktionen des ersten Ventils (2) sowie des (ersten) Druckreglers (3) in einem Druckregler integriert sind.

6. Vorrichtung nach Anspruch 2 oder 3, **dadurch gekennzeichnet, dass** dem ersten und/oder dem zweiten Fremd- oder Eigenmedium-gesteuerten Schaltventil bzw. dem Fremd- oder Eigenmedium-gesteuerten Schaltventil (ein) Druckanzeiger, vorzugsweise (ein) Manometer, zugeordnet ist/sind.

7. Vorrichtung nach einem der vorhergehenden Ansprüche 1 bis 6, **dadurch gekennzeichnet, dass** sämtliche Ventile (2, 6, 8) und Druckregler (3, 4) bzw. Schaltventile innerhalb eines Schaltkastens oder einer Ventilbox angeordnet sind.

8. Mobile Transportvorrichtung, insbesondere ein Fahrzeug, aufweisend wenigstens eine Speichervorrichtung, die der Speicherung eines unter Druck stehenden Mediums dient, wobei die Speichervorrichtung eine Entnahme- bzw. Abfüllleitung aufweist, **dadurch gekennzeichnet, dass** das Fahrzeug wenigstens eine Vorrichtung zur Druckreduzierung eines unter Druck stehenden Mediums nach einem der vorhergehenden Ansprüche aufweist, wobei die Vorrichtung zur Druckreduzierung eines unter Druck stehenden Mediums der Entnahme- bzw. Abfüllleitung (1) der mobilen Transportvorrichtung zugeordnet ist.
